# NEUE EUROPÄISCHE PATENTSCHRIFT

(11) **EP 1 953 012 B2**
(45) Veröffentlichungstag und Bekanntmachung des Hinweises auf die Entscheidung über den Einspruch: **21.02.2018**
(45) Hinweis auf die Patenterteilung: 19.05.2010
(21) Anmeldenummer: 08001819.5
(22) Anmeldetag: 31.01.2008
(51) Int. Cl.: B60G 7/00

(54) **Gelenkstange**
Link rod
Tige articulée

(30) Priorität: 03.02.2007 DE 202007001892 U
(43) Veröffentlichungstag der Anmeldung: 06.08.2008
(73) Patentinhaber: Tube Technology System AG, 03238 Massen / Niederlausitz (DE)
(72) Erfinder: Winkler, Roman, 08412 Werdau (DE); Wackes, Ullrich, 08115 Lichtentanne (DE); Fritzsche, Erik, 08412 Werdau (DE)
(74) Vertreter: Rumrich, Gabriele

(56) Entgegenhaltungen:
- EP-A- 0 832 769
- EP-A- 1 217 233
- WO-A1-00/20768
- WO-A1-2007/147695
- WO-A2-02/074562
- DE-A1- 10 063 928
- DE-A1- 10 334 192
- DE-A1- 19 504 086
- DE-A1- 19 958 149
- DE-B4-102005 034 210
- DE-C1- 19 513 714
- DE-U1- 29 721 050
- US-A- 3 164 389
- US-A- 5 947 627
- US-A- 6 030 570
- US-B1- 6 698 963

## Beschreibung

Die Erfindung betrifft eine Gelenkstange zum Einsatz in Fahrzeugen.

Bei einer Gelenkstange, die auch als Koppelstange, Pendelstange oder Fahrwerksstrebe bezeichnet wird, sind meist an beiden Enden gehäuseartige Ausnehmungen vorgesehen, welche die Kugelzapfen mit ihren Kugeln schwenkbar aufnehmen, wodurch eine gelenkige Verbindung gebildet wird. Dabei kann die Kugel des Kugelzapfens in einer Gleitschale gelagert sein. Die Stange ist dabei meist aus Vollmaterial mit kreisförmigem Querschnitt hergestellt, wodurch ein hoher Materialeinsatz und ein hohes Gewicht zu verzeichnen sind. Außerdem müssen die gehäuseartigen Enden mit der Stange verschweißt werden.
Weiterhin ist es bekannt, Gelenkstangen aus Kunststoffprofil durch Spritzgießen zu fertigen. In DE 195 04 086 A1 wird eine aufwendig hergestellte Fahrwerksstrebe beschrieben, die im Spritzgießverfahren aus Kunststoff hergestellt ist und deren Zapfen im Winkel von 180° zueinander angeordnet sind. Der Strebenkörper ist rohrförmig mit an den Enden einstückig ausgeformten Gelenkgehäusen ausgebildet. Nach dem Herstellen des Strebenkörpers durch Spritzgießen wird in jede gehäuseartige Ausnehmung ein in einer Gleitschale gelagerter Kugelzapfen eingesetzt. Jeder Kugelzapfen ist mittels eines Dichtungsbalges gegenüber dem Gelenkgehäuse abgedichtet. Nachteilig ist die vorgegebene Ausrichtung der Kugelzapfen. Sollen die Zapfen in einem Winkel von z.B. 45° zueinander ausgerichtet sein, so muss diese Orientierung bereits in den gehäuseartigen Ausnehmungen an den beiden Enden der Pendelstange enthalten sein.

In EP 0 916 858 B1 wird ein Verfahren zur Herstellung eines Kugelgelenks beschrieben, bei welchem nach Fig. 2 ein Befestigungsteil in Form eines Pendelarms aus einem Formteil mit einem Kugelzapfen verbunden wird. Der Pendelarm weist an seinem Ende eine Ausnehmung auf, in welche ein Kunststoffgehäuse eingesetzt wird, in welchem die Kugel des Kugelzapfens gelagert ist. Nachteil dieser Lösung ist die nicht zuverlässige Verbindung zwischen dem Kunststoffgehäuse und dem Ende des Pendelarms. Weiterhin ist ersichtlich, dass das Formteil das Gehäuse weit überragt, wodurch ein großer Bauraum benötigt wird.

Aus DE 102 12 791 A1 ist ein Querlenker bekannt, welcher aus einem Schalenkörper aus Metallblech besteht, der an zwei Schenkeln Durchzüge aufweist, wobei in einem Durchzug ein Kugelgelenk und in dem anderen ein Gummilager eingesetzt sind. Eine Kunststoffummantelung des Kugelgelenkes ist nicht vorgesehen.

DE 101 53 799 A1 betrifft eine Kraftverbindungsstrebe eines Fahrzeuges, bestehend aus einem länglichen Grundkörper aus einer flachen Metalleinlage und einer die Restkontur bildenden Kunststoffstruktur, welche durch Umspritzen der Metalleinlage gebildet wird. Die zylinderförmigen Lageraufnahmen werden dabei mit ausgeformt und anschließend die Lager, welche in Form von Molekularlagern ausgebildet sind, in diese eingesetzt.

Ein Verbindungsstück zum gelenkigen Verbinden von im Fahrwerk eines Kraftfahrzeuges angeordneten Bauelementen beschreibt DE 100 63 928 A1. Dabei weist ein lang gestreckter rohrförmiger Metallkörper ein mit einem Kunststoffgehäuse versehenes Gelenk auf, wobei eine formschlüssige Verbindung zwischen der Außenfläche des Endbereiches des Metallkörpers und dem Kunststoffgehäuse gebildet wird. Die Kugel des Kugelzapfens sitzt in einem Kugelgehäuse welches in die Bohrung des Gehäuses eingesteckt wird.

Dieses Dokument wird als nächster Stand der Technik angesehen.

Aus DE 25 39 698 A1 ist ein Drehstabgestänge für die Radaufhängung eines Kraftfahrzeuges bekannt, welches aus einer Verbindungsstange aus Kunststoff mit einem H-förmigen Querschnitt besteht, die an beiden Enden angeformte Kugelpfannen aufweist, in welche abgedichtete Kugelbolzen eingerastet sind.

Ein Polymertorsionsstab, welcher mit Stahl verstärkt ist, wird in DE697 16 396 T2 beschrieben. Dabei werden an den Enden des Torsionsstabes Ausnehmungen vorgesehen, wobei in jede Ausnehmung jeweils ein Anschlussteil einsetzbar ist.

In DE 20 2005 011 687 U1 wird ein elektrisch verstellbarer Rückspiegel beschrieben, bei dem der Spiegelträger mittels einer Gelenkkugel in einer Kugelschale gelagert ist, wobei die Kugelschale zwei Spreizschlitze aufweist, die ein radiales dehnen zum einführen der Kugel gewährleisten.

Nachteil der vorgenannten Lösungen ist der relativ aufwendige Aufbau und die teilweise ungenügende Stabilität im Bereich der Verbindung zwischen dem langgestreckten strebenförmigen Element und dem Gelenk und der teilweise große Bauraumbedarf.

Aufgabe der Erfindung ist es, eine Gelenkstange zum Einsatz in Fahrzeugen zu entwickeln, die aus einem Strebenkörper besteht, der an wenigstens einem Ende mit einem Kugelzapfen ein Gelenk bildet, wobei die Gelenkstange einen einfachen konstruktiven Ausbau aufweist, im Bereich des Gelenkes einen geringen Bauraum benötigt sowie einfach und kostengünstig herstellbar ist und es im Bedarfsfall gestattet, die vorgegebene Lageorientierung zwischen Strebenkörper und Kugelzapfen dauerhaft einzustellen.

Diese Aufgabe wird erfindungsgemäß mit den Merkmalen des ersten Patentanspruchs gelöst. Vorteilhafte Ausführungen ergeben sich aus den Unteransprüchen.

Die Gelenkstange zum Einsatz in Fahrzeugen weist erfindungsgemäß einen Strebenkörper auf, der an wenigstens einem Ende ein sich anschließendes Gelenk aufweist, wobei der Strebenkörper aus einem offenen Profil gebildet wird und das Gelenk aus einer, in einer dünnwandigen Gleitschale gelenkig gelagerten, Kugel eines Kugelzapfensbesteht, wobei das Ende des Strebenkörpers und die Gleitschale gemeinsam zumindest teilweise mit einer Kunststoffummantelung umspritzt sind und die Kunststoffummantelung die Verbindung zwischen dem Ende des Strebenkörpers und der dünnwandigen Gleitschale des Kugelgelenkes herstellt.

Dadurch ist die Gelenkstange kostengünstig herstellbar und weist durch die profilierte Ausbildung des Strebenkörpers die erforderliche Steifigkeit und Übertragungsfähigkeit auf.

Bevorzugt wird der Strebenkörper aus einem durch Umformung hergestellten offenen Profil gebildet und besteht bevorzugt aus Blech, Kunststoff, Faserverbundwerkstoff oder deren Kombinationen. In einer bevorzugten Variante ist der Strebenkörper als ein Blechformteil ausgebildet, wodurch eine besonders kostengünstige Herstellung der Gelenkstange möglich ist.
Es schließt bevorzugt an jedes Ende des Strebenkörpers ein Gelenk an, wobei in Konstruktionslage jede Kugel der beiden Kugelzapfen mit ihrem Kugelmittelpunkt in der in Längsrichtung des Strebenkörpers ausgerichteten Hauptträgheitsachse liegt. Dadurch werden unerwünschte Biegemomente weitestgehend vermieden. Besteht der Strebenkörper aus einem plastisch deformierbaren Material, ist es möglich, diesen entlang seiner Längsachse (irreversibel) plastisch zu verwinden und dadurch die Winkeistellung der Gelenke zueinander einzustellen. Bevorzugt ist das Ende des Strebenkörpers in der senkrecht zur Längsachse des Kugelzapfens liegenden Ebene so profiliert, dass die Kugel zumindest teilweise, bevorzugt mindestens in einem Drittel deren Umfangs, umringt wird. Es ist vorteilhafter Weise möglich, den Strebenkörper im Bereich jedes Gelenkes in Form eines Ringabschnitts oder in Form eines Ringes auszubilden, so dass dieser die Gleitschale gehäuseartig umgibt. Der Ringabschnitt oder der Ring weisen dazu vorteilhafter Weise eine Wandung auf, die im Wesentlichen in Richtung zur Längsachse der Kugelzapfen ausgerichtet ist.
Der Strebenkörper ist insbesondere in Form eines U-Profiles mit zwei Wänden, die in Richtung zur Längsachse des Kugelzapfens ausgerichtet sind, und einem dazwischen liegenden Profilabschnitt ausgebildet, wodurch eine einfache und kostengünstige Herstellung des Strebenkörpers möglich ist.
Die Wände des Strebenkörpers in Richtung zum Gelenk sind zumindest teilweise der Krümmung des Ringabschnitts oder des Ringes angepasst, wodurch im Übergang vom Strebenkörper zum Ringsbschnitt oder Ring, d.h. im Übergang vom Strebenkörper zum Gelenk, der besonders beansprucht ist, eine bessere Stabilität gewährleistet wird.

An den Ringabschnitt oder an den Ring schließt sich weiterhin ein Kragen/Flansch an, der in den zwischen den Wänden des U-Profils liegenden Profilabschnitt übergeht und ebenfalls zur Stabilitätssteigerung in diesem Bereich beiträgt.
Die Höhe der Kunststoffummantelung in Richtung zur Längsachse des Kugelzapfens sollte mindestens ein Viertel des Kugeldurchmessers betragen und dabei über den Kugeläquator der Kugel des Kugelzapfens reichen, um die erforderliche Übertragungsfähigkeit des Gelenkes zu gewährleisten.
Die Kunststoffummantelung kann auch den Polbereich der Gleitschale umschließen und ist dann vorzugsweise in dem vom Zapfen angewandten Bereich der Kugel der Krümmung der Kugel bzw. der Gleitschale angepasst. Es ist möglich, die Kunststoffummantelung aus verstärktem (z.B. glasfaserverstärktem) oder unverstärktem Kunststoff zu fertigen, wobei es möglich ist, die Eigenschaft der Gelenke durch den Faseranteil in der Kunststoffummantelung mitzubestimmen.
Die in Richtung zum Zapfen weisende Öffnung der Kunststoffummantelung kann so gestaltet werden, dass damit die Freiheitsgrade der Schwenkbewegung des Kugelzapfens festlegbar sind.
Weiterhin kann der Strebenkörper mit einer Oberflächenschutzschicht versehen sein.
Es ist ebenfalls möglich, die Gelenkstange so zu gestalten, dass im Bereich des Gelenks die Kunststoffummantelung einen dem Zapfen gegenüberliegenden Bereich der Gleitschale freilässt. Dabei kann, zumindest der nicht mit einer Kunststoffummantelung versehene Bereich der Gleitschale mit einer stoß- und schlagfesten Beschichtung versehen werden.

Ein weiterer Vorteil der erfindungsgemäßen Lösung besteht darin, dass die Gleitschale wenigstens eine deren Montage auf die Kugel des Kugelzapfens gewährleistende Sollbruchstelle aufweist.
Diese erstreckt sich bevorzugt von einer Kerbe im Rand der Gleitschale in Richtung zum Polbereich bis über den Äquatorbereich. Die Sollbruchstelle ist bei der Montage von Kugelzapfen und Gleitschale geöffnet und gewährleistet ein Auffedern der Gleitschale. Nach der Montage federt die Gleitschale zurück, so dass die Ränder der Sollbruchstelle nahezu oder vollständig (insbesondere spaltfrei) aneinander anliegen. Die Sollbruchstelle wird bevorzugt beim Spritzgießen der Gleitschale hergestellt, wobei die Wanddicke im Bereich der Sollbruchstelle verringert ist und die Kerbe im Randbereich der Gleitschale geformt wird. Das Aufreißen der Sollbruchstelle von der Kerbe bis über den Äquatorbereich erfolgt dann beim Entformen der Gleitschale. Erfindungsgemäß können wenigstens eine erste Kerbe aus Richtung des Außendurchmessers der Gleitschale und/oder wenigstens eine zweite Kerbe aus Richtung des Innendurchmessers in die Gleitschale eingebracht sein. Dabei können die erste Kerbe und die zweite Kerbe zueinander gegenüberliegend angeordnet sein, so dass zwischen diesen die Sollbruchstelle ausgebildet ist.

Die Erfindung wird nachfolgend anhand von Ausführungsbeispielen und zugehörigen Zeichnungen näher erläutert. Es zeigen:
- Fig. 1:: Gelenkstange im montierten Zustand, mit zwei um 180° zueinander versetzten Kugelzapfen,
- Fig. 2:: Seitenansicht eines Strebenkörpers mit in den Gelenkpunkten positionierten Kugelzapfen,
- Fig. 3:: Ende eines Strebenkörpers, der im Gelenkpunkt in Form eines Ringes ausgebildet ist,
- Fig. 4:: Ende eines Strebenkörpers, der im Gelenkpunkt in Form eines Ringabschnittes ausgebildet ist,
- Fig. 5:: Längsschnitt A-A gem. Fig. 1 durch einen Gelenkpunkt, wobei die Gleitschale an ihrem Außenumfang vollständig von einer Kunststoffummantelung umspritzt ist,
- Fig. 6:: Längsschnitt A-A gem. Fig. 1 durch einen Gelenkpunkt, wobei die Gleitschale an ihrer zum Zapfen abgewandten Seiten aus der Kunststoffummantelung ragt,
- Fig. 7:: Prinzipskizze einer Gleitschale mit Sollbruchstelle und erster Kerbe im Randbereich, ausgehend vom Außendurchmesser,
- Fig. 8:: Teilschnitt durch eine Gleitschale im Bereich der Sollbruchstelle mit einer zweiten Kerbe ausgehend vom Innendurchmesser,
- Fig. 9:: Teilschnitt durch eine Gleitschale im Bereich der Sollbruchstelle mit sich gegenüberliegender erster und zweiter Kerbe.

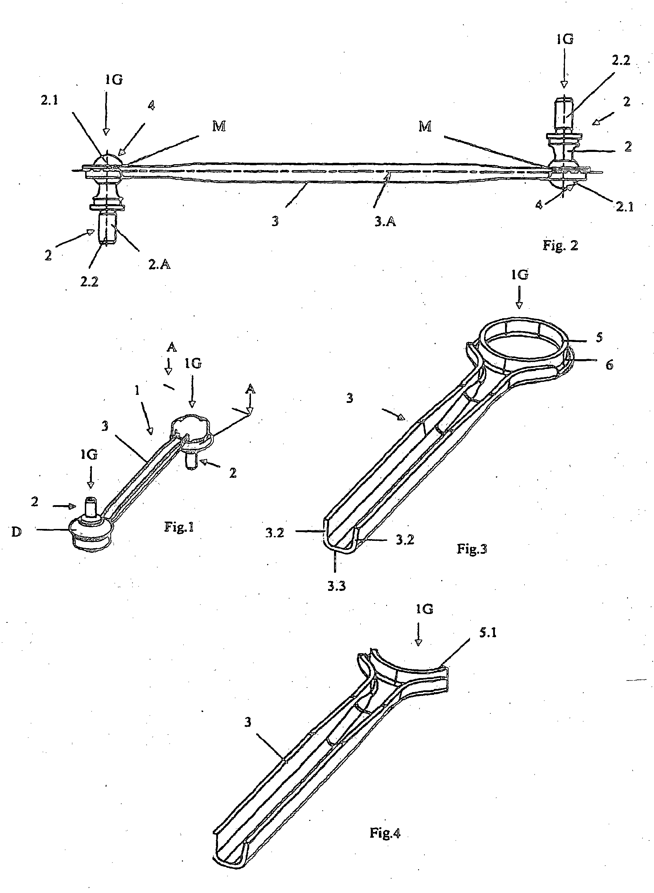

In Figur 1 ist eine Gelenkstange 1 in Form einer Pendelstange mit zwei um 180° versetzten Kugelzapfen 2 in den Gelenken 1 G an beiden Enden eines Strebenkörpers 3 im montierten Zustand dargestellt, wobei in jedem Gelenk 1 G eine Abdichtung mittels eines Dichtungsbalges D erfolgt.
Der Strebenkörper 3 zwischen den Gelenken 1 G ist dabei erstmalig als Blechformteil ausgebildet.

Fig. 2 zeigt die Kugelzapfen 2 und den Strebenkörper 3, wobei im Bereich der Gelenke 1 G die Kugelzapfen 2 um 180° versetzt positioniert wurden. Der aus einer Kugel 2.1 und einem Zapfen 2.2 bestehende und eine Längsachse 2A aufweisende Kugelzapfen 2 und die Gleitschale 4 wurden vormontiert und so positioniert, dass der Mittelpunkt M der Kugeln 2.1 in Konstruktionslage (hier dargestellt) in der Hauptträgheitsachse 3.A in Längsrichtung des Strebenkörpers 3 liegt.

Ein Ende eines Strebenkörpers 3, dessen Ende im Bereich des Gelenkes1 G in Form eines Ringes 5 ausgebildet ist, zeigt Fig. 3. Strebenkörper 3 und Ring 5 sind einteilig als Formteil, insbesondere Blechformteil hergestellt. Mittig im gehäuseartig geformten Ring 5 wird der hier nicht dargestellte Kugelzapfen positioniert. Es ist erkennbar, dass der Strebenkörper 3 bis kurz vor dem ringförmigen Gelenkpunkt einen U-förmigen Querschnitt 3.1 aufweist, der aus zwei im wesentlichen parallelen Wänden 3.2, die in Richtung zur Längsachse 2a der Kugelzapfen 2 ausgerichtet sind, und einem dazwischen liegenden Profilabschnitt 3.3 gebildet wird. Die Wandung (der Durchzug) des Ringes 5 liegt im Wesentlichen parallel zu den Wänden 3.2 des U-Profils 3.1. An den Ring 5 schließt sich ein Kragen/Flansch 6 an, der in den zwischen den Wänden 3.2 des U-Profils 3.1 liegenden Profilabschnitt 3.3 übergeht.

Gem. Fig. 4 weist der Strebenkörper 3 einen ähnlichen Aufbau auf, jedoch ist hier das Ende im Bereich des herzustellenden Gelenkes 1 G nicht in Form eines Ringes, sondern nur als Ringabschnitt 5.1 ausgebildet, der geeignet ist, die nicht dargestellte Kugel eines Kugelzapfens ca. 30% (quer zur Längsachse des Kugelzapfens) zu umringen.

Gemäß weiterer nicht dargestellter Ausführungsbeispiele ist es auch möglich, das offene Profil des Strebenkörpers im Querschnitt nicht U-förmig sondern L-förmig, Z-förmig, M-förmig, wellenförmig oder anders zu gestalten.

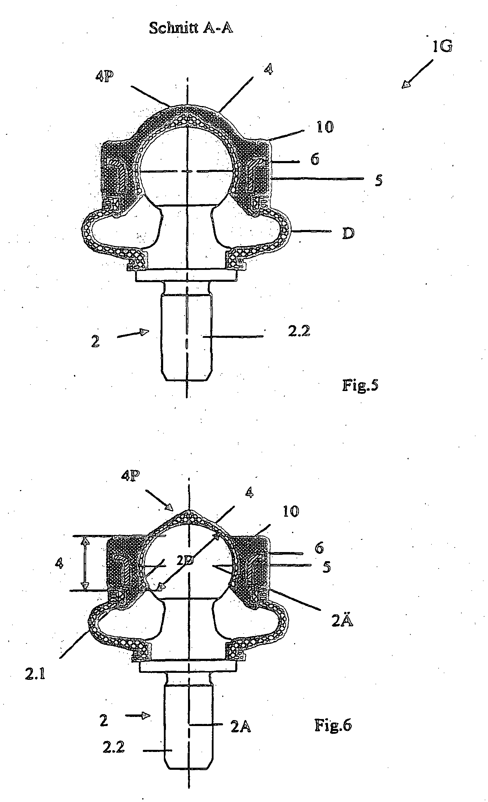

Der Längsschnitt A-A gem. Fig. 1 durch ein Gelenk 1 G, wobei die Gleitschale 4 an ihrem Außenumfang und somit auch an ihrem Polbereich 4P vollständig von einer Kunststoffummantelung 10 umspritzt ist, wird in Fig. 5 dargestellt. Nachdem man die Kugelzapfen 2 mit den vormontierten Gleitschalen 4, wie in Fig. 2 dargestellt, positioniert hat, wurden diese mit einer Kunststoffummantelung 10 umspritzt, die die Verbindung zwischen dem in der Gleitschale 4 gelagerten Kugelzapfen 2 und dem einen Flansch 6 aufweisenden Ring 5 an einem Ende eines Strebenkörpers im Gelenk 1 G herstellt Die Kunststoffummantelung 10 weist in Richtung zum Zapfen 2.2 eine Aufnahme für den Dichtungsbalg D auf, der zwischen Zapfen 2.2 und Kunststoffummantelung 10 das Gelenk 1 G abdichtet.

In Fig. 6 wird der Längsschnitt A-A gem. Fig. 1 durch ein Gelenk 1 G gezeigt, wobei die Gleitschale 4 an ihrer zum Zapfen 2.2 des Kugelzapfens 2 abgewandten Seite mit ihrem Polbereich 4P aus der Kunststoffummantelung 10 ragt.. Auch hier umgreift der einen Flansch 6 aufweisende Ring 5 gehäuseartig die Gleitschale 4. Die Höhe H der Kunststoffummantelung 10, der im Bereich der Gleitschale 4 anliegt, sollte dabei mindestens ¼ des Durchmesser 2D der Kugel 2.1 des Kugelzapfens 2 betragen. Dabei übergreift die Kunststoffummantelung 10 den Äquatorbereich 2Ä der Kugel 2.1 in Richtung der Längsachse 2A des Kugelzapfens 2
Es ist möglich, den nicht mit einer Kunststoffummantelung versehenen Polbereich der Gleitschale mit einer Stoß- und schlagfesten Beschichtung zu versehen, die auch das Eindringen von Verunreinigungen und Feuchtigkeit verhindert.

Gemäß einer nicht dargestellten Ausführungsvariante kann der Strebenkörper auch plastisch verdrillt werden, so dass die Winkel der beiden Kugelzapfen zueinander dauerhaft einstellbar sind.

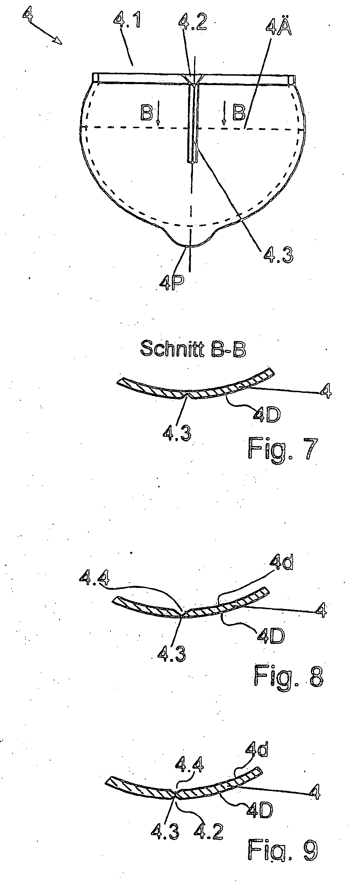

Die Prinzipskizze einer Gleitschale 4 mit einer im Randbereich 4.1 ausgehenden und in den Außendurchmesser 4D der Gleitschale 4 eingebrachten ersten Kerbe 4.2 und einen den Grund der sich an die erste Kerbe 4.2 anschließenden Sollbruchstelle 4.3 ist in Fig. 7 dargestellt.
Die erste Kerbe 4.2 und die Sollbruchstelle 4.3 werden bei Spritzgießen der Gleitschale 4 hergestellt. Durch die verringerte Wanddicke im Bereich der Sollbruchstelle 4.3 reißt die Gleitschale 4 beim Entformen an der Sollbruchstelle 4.3, ausgehend von der ersten Kerbe 4.2, auf und federt wieder zusammen. Durch diese Sollbruchstelle 4.3 wird bei der Montage auf die hier nicht dargestellte Kugel ebenfalls das erforderliche Auffedern der Gleitschale 4 gewährleistet. Nach der Montage federt die Gleitschale wieder zurück, so dass die Ränder der Sollbruchstelle aneinander anliegen und kein störender Spalt, wie bei herkömmlichen Montageschlitzen, vorhanden ist.
Die von außen her eingebrachte erste Kerbe 4.2 dient dabei gleichzeitig als Verdrehsicherung der Gleitschale 4 in Bezug auf den hier nicht dargestellten Strebenkörper, da Material der Kunststoffummantelung beim Umspritzen in diese erste Kerbe 4.2 eindringt.

Gemäß eines in Fig. 8 dargestellten Ausführungsbeispieles wurde eine zweite Kerbe 4.4 ausgehend vom Innendurchmesser 4d der Gleitschale 4 eingebracht, so dass die Sollbruchstelle 4.3 in Richtung zum Außendurchmesser 4D liegt. Die dadurch in Richtung zur hier nicht dargestellten Kugel gebildete Ausnehmung kann gleichzeitig zum Aufnehmen von Gleitmedium als Schmiernut eingesetzt werden.

Weiterhin kann aus Richtung des Außendurchmessers 4D wenigstens eine Kerbe 4.2 und aus Richtung des Innendurchmessers 4d wenigstens eine, bevorzugt der Kerbe 4.2 gegenüberliegende, zweite Kerbe 4.4 vorgesehen werden (Fig. 9), so dass zwischen beiden Kerben 4.2, 4.3 die Sollbruchstelle 4.3 gebildet wird. Die Kerbe 4.2 bildet dann in Verbindung mit der darin eingeformten Kunststoffummantelung (hier nicht dargestellt) eine Verdrehsicherung und die Kerbe 4.4 kann als Schmiernut verwendet werden. Entsprechend einer nicht dargestellten Ausführungsform können auch zueinander versetzte erste Kerben 4.2 und zweite Kerben 4.2 eingesetzt werden.
Es ist vorteilhaft, 2 bis 6 der ersten Kerben 4.2 und/oder 2 bis 6 der Kerben zweiten 4.4 einzusetzen, so dass entsprechend 2 bis 6 Sollbruchstellen 4.3 gebildet werden.

## Patentansprüche

1. Gelenkstange zum Einsatz in Fahrzeugen, mit einem Strebenkörper, an dessen wenigstens einem Ende ein Gelenk anschließt, wobei der Strebenkörper aus einem offenen Profil gebildet wird und das Gelenk aus einer, in einer dünnwandigen Gleitschale gelenkig gelagerten, Kugel eines Kugelzapfens gebildet wird, wobei das Ende des Strebenkörpers und die Gleitschale gemeinsam zumindest teilweise mit einer Kunststoffummantelung umspritzt sind, und die Kunststoffummantelung die Verbindung zwischen dem Ende des Strebenkörpers und der dünnwandigen Gleitschale des Kugelgelenkes herstellt, wobei
- der an ein Gelenk anschließende Strebenkörper in Form eines U-Profiles mit zwei Wänden, die in Richtung zur Längsachse des Kugelzapfens ausgerichtet sind, und einem dazwischen liegenden Profilabschnitt ausgebildet ist und
- der Strebenkörper im Bereich jedes Gelenkes in Form eines Ringabschnitts oder in Form eines Ringes ausgebildet ist und
- sich an den Ringabschnitt oder an den Ring ein Kragen/Flansch anschließt, der in den zwischen den Wänden des U-Profils liegenden Profilabschnitt übergeht und
- das Ende des Strebenkörpers in der senkrecht zur Längsachse des Kugelzapfens liegenden Ebene so profiliert ist, dass er die Kugel zumindest teilweise umringt wobei das Ende des Strebenkörpers die Kugel mindestens in einem Drittel deren Umfangs umringt.

2. Gelenkstange nach Anspruch 1, **dadurch gekennzeichnet, dass** an jedes Ende des Strebenkörpers ein Gelenk anschließt und dass in Konstruktionslage jede Kugel der beiden Kugelzapfen mit ihrem Kugelmittelpunkt in der in Längsrichtung des Strebenkörpers ausgerichteten Hauptträgheitsachse liegt.

3. Gelenkstange nach Anspruch 1 oder 2, **dadurch gekennzeichnet, dass** der Strebenkörper aus Blech, Kunststoff, Faserverbundwerkstoff oder deren Kombinationen besteht.

4. Gelenkstange nach einem der Ansprüche 1 bis 3, **dadurch gekennzeichnet, dass** der Strebenkörper ein Blechformteil ist.

5. Gelenkstange nach einem der Ansprüche 1 bis 4, **dadurch gekennzeichnet, dass** der Strebenkörper entlang seiner Längsachse (irreversibel) plastisch verdrehbar/verwindbar und dadurch die Winkelstellung der Gelenke zueinander einstellbar ist.

6. Gelenkstange nach einem der Ansprüche 1 bis 5, **dadurch gekennzeichnet, dass** der Ringabschnitt oder der Ring eine Wandung aufweisen, wobei die Wandung im Wesentlichen in Richtung zur Längsachse der Kugelzapfen ausgerichtet ist.

7. Gelenkstange nach Anspruch 6, **dadurch gekennzeichnet, dass** die Wände des Strebenkörpers in Richtung zum Gelenk zumindest teilweise der Krümmung des Ringabschnitts oder des Ringes folgen/angepasst sind.

8. Gelenkstange nach einem der Ansprüche 1 bis 7, **dadurch gekennzeichnet, dass** die Höhe der Kunststoffummantelung in Richtung zur Längsachse des Kugelzapfens mindestens ein Viertel des Kugeldurchmessers beträgt und über den Kugeläquator der Kugel des Kugelzapfens reicht.

9. Gelenkstange nach einem der Ansprüche 1 bis 8, **dadurch gekennzeichnet, dass** die Kunststoffummantelung in dem vom Zapfen angewandten Bereich der Kugel der Krümmung der Kugel/der Gleitschale angepasst ist.

10. Gelenkstange nach einem der Ansprüche 1 bis 9, **dadurch gekennzeichnet, dass** die Kunststoffummantelung aus verstärktem oder unverstärktem Kunststoff besteht.

11. Gelenkstange nach Anspruch 10, **dadurch gekennzeichnet, dass** die Kunststoffummantelung aus glasfaserverstärktem Kunststoff besteht.

12. Gelenkstange nach Anspruch 10 oder 11, **dadurch gekennzeichnet, dass** die Eigenschaft der Gelenkpunkte durch den Faseranteil in der Kunststoffummantelung mitbestimmbar ist.

13. Gelenkstange nach einem der Ansprüche 1 bis 12, **dadurch gekennzeichnet, dass** die Kunststoffummantelung in Richtung zum Zapfen eine Öffnung aufweist, welche die Freiheitsgrade der Schwenkbewegung des Kugelzapfens definiert.

14. Gelenkstange nach einem der Ansprüche 1 bis 13, **dadurch gekennzeichnet, dass** der Strebenkörper mit einer Oberflächenschutzschicht versehen ist.

15. Gelenkstange nach einem der Ansprüche 1 bis 16, **dadurch gekennzeichnet, dass** die Kunststoffummantelung einen dem Zapfen gegenüberliegenden Bereich der Gleitschale freilässt.

16. Gelenkstange nach Anspruch 15, **dadurch gekennzeichnet, dass** zumindest der nicht mit einer Kunststoffummantelung versehene Bereich der Gleitschale mit einer stoß- und schlagfesten Beschichtung versehen ist.

17. Gelenkstange nach einem der Ansprüche 1 bis 16, **dadurch gekennzeichnet, dass** der Außendurchmesser der Gleitschale dem Außendurchmesser der Kugel folgt.

18. Gelenkstange nach einem der Ansprüche 1 bis 17, **dadurch gekennzeichnet, dass** der Außendurchmesser der Gleitschale in den sich an den Polbereich anschließenden Bereichen dem Außendurchmesser der Kugel folgt.

19. Gelenkstange nach einem der Ansprüche 1 bis 18, **dadurch gekennzeichnet, dass** der Wandbereich der Gleitschale in deren Polbereich verstärkt ist.

20. Gelenkstange nach einem der Ansprüche 1 bis 19, **dadurch gekennzeichnet, dass** die Gleitschale wenigstens eine deren Montage auf die Kugel des Kugelzapfens gewährleistende Sollbruchstelle aufweist.

21. Gelenkstange nach Anspruch 20, **dadurch gekennzeichnet, dass** die Sollbruchstelle in Form einer Kerbe ausgebildet ist.

22. Gelenkstange nach Anspruch 20 oder 21, **dadurch gekennzeichnet, dass** sich die Sollbruchstelle vom Rand der Gleitschale in Richtung zum Polbereich bis über den Äquatorbereich erstreckt.

23. Gelenkstange nach Anspruch 20 bis 22, **dadurch gekennzeichnet, dass** die Sollbruchstelle bei der Montage von Kugelzapfen und Gleitschale geöffnet ist oder während der Montage durch das Einbringen der Kugel des Kugelzapfens in die Gleitschaleaufbricht, so dass ein das Einbringen der Kugel des Kugelzapfens gewährleistendes Auffedern der Gleitschale gewährleistet ist.

24. Gelenkstange nach einem der Ansprüche 20 bis 23, **dadurch gekennzeichnet, dass** die Gleitschale nach der Montage zurückfedert, so dass die Ränder der Sollbruchstelle wieder nahezu oder vollständig aneinander anliegen.

25. Gelenkstange nach einem der Ansprüche 22 bis 26, **dadurch gekennzeichnet, dass** die Sollbruchstelle in Form einer V-förmigen , die Wanddicke der Gleitschale verringernden Kerbe ausgebildet ist.

26. Gelenkstange nach einem der Ansprüche 20 bis 25, **dadurch gekennzeichnet, dass** wenigstens eine erste Kerbe aus Richtung des Außendurchmessers (4D) in die Gleitschale (4) eingebracht ist.

27. Gelenkstange nach einem der Ansprüche 20 bis 26, **dadurch gekennzeichnet, dass** wenigstens eine zweite Kerbe aus Richtung des Innendurchmessers (4d) der Gleitschale (4) diese eingebracht ist.

28. Gelenkstange nach einem der Ansprüche 20 bis 79, **dadurch gekennzeichnet, dass** wenigstens eine erste Kerbe und eine zweite Kerbe in die Gleitschale (4) eingebracht sind.

29. Gelenkstange nach einem der Ansprüche 22 bis 28, **dadurch gekennzeichnet, dass** die erste Kerbe und die zweite Kerbe zueinander gegenüberliegend angeordnet sind und zwischen diesen die Sollbruchstelle ausgebildet ist.

## Claims

1. A joint rod for use in vehicles, comprising a strut body, on at least one end of which a joint adjoins, wherein the body is formed from an open profile and the joint is formed from a ball of a ball stud, which is articulated in a thin-walled guide shell, wherein the end of the strut body and the guide shell are jointly at least partially extrusion coated using a plastic jacket, and the plastic jacket establishes the connection between the end of the strut body and the thin-walled guide shell of the ball joint, wherein
- the strut body adjoining a joint is designed in the form of a U-profile having two walls, which are aligned in the direction of the longitudinal axis of the ball stud, and an interposed profile section, and
- the strut body is designed in the region of each joint in the form of a ring section or in the form of a ring, and
- a collar/flange, which merges into the profile section located between the walls of the U-profile, adjoins the ring section or the ring, and
- the end of the strut body is profiled in the plane lying perpendicular to the longitudinal axis of the ball stud so that it at least partially encloses the ball, wherein the end of the strut body encloses the ball in at least one-third of its circumference.

2. The joint rod according to Claim 1, **characterized in that** a joint adjoins each end of the strut body, and in the construction position, each ball of the two ball studs lies with its ball center point in the main inertial axis aligned in the longitudinal direction of the strut body.

3. The joint rod according to Claim 1 or 2, **characterized in that** the strut body consists of sheet metal, plastic, fiber composite material, or the combinations thereof.

4. The joint rod according to any one of Claims 1 to 3, **characterized in that** the strut body is a formed sheet-metal part.

5. The joint rod according to any one of Claims 1 to 4, **characterized in that** the strut body can be (irreversibly) plastically turned/twisted along its longitudinal axis and the angle position of the joints in relation to one another is thus settable.

6. The joint rod according to any one of Claims 1 to 5, **characterized in that** the ring section or the ring has a wall, wherein the wall is aligned essentially in the direction of the longitudinal axis of the ball stud.

7. The joint rod according to Claim 6, **characterized in that** the walls of the strut body at least partially follow/are adapted to the curvature of the ring section or the ring in the direction of the joint.

8. The joint rod according to any one of Claims 1 to 7, **characterized in that** the height of the plastic jacket in the direction of the longitudinal axis of the ball stud is at least one-fourth of the ball diameter and extends beyond the ball equator of the ball of the ball stud.

9. The joint rod according to any one of Claims 1 to 8, **characterized in that** the plastic jacket is adapted to the curvature of the ball/the guide shell in the region of the ball facing toward the stud.

10. The joint rod according to any one of Claims 1 to 9, **characterized in that** the plastic jacket consists of reinforced or non-reinforced plastic.

11. The joint rod according to Claim 10, **characterized in that** the plastic jacket consists of glass-fiber-reinforced plastic.

12. The joint rod according to Claim 10 or 11, **characterized in that** the property of the joint points is co-determinable by the fiber component in the plastic jacket.

13. The joint rod according to any one of Claims 1 to 12, **characterized in that** the plastic jacket has an opening in the direction of the stud, which defines the degrees of freedom of the pivot movement of the ball stud.

14. The joint rod according to any one of Claims 1 to 13, **characterized in that** the strut body is provided with a surface protection layer.

15. The joint rod according to any one of Claims 1 to 16, **characterized in that** the plastic jacket exposes a region of the guide shell opposite to the stud.

16. The joint rod according to Claim 15, **characterized in that** at least the region of the guide shell not provided with a plastic jacket is provided with a coating resistant to shock and impact.

17. The joint rod according to any one of Claims 1 to 16, **characterized in that** the external diameter of the guide shell follows the external diameter of the ball.

18. The joint rod according to any one of Claims 1 to 17, **characterized in that** the external diameter of the guide shell follows the external diameter of the ball in the regions adjoining the pole region.

19. The joint rod according to any one of Claims 1 to 18, **characterized in that** the wall region of the guide shell is reinforced in its pole region.

20. The joint rod according to any one of Claims 1 to 19, **characterized in that** the guide shell has at least one intended breakpoint, which ensures its mounting on the ball of the ball stud.

21. The joint rod according to Claim 20, **characterized in that** the intended breakpoint is designed in the form of a notch.

22. The joint rod according to Claim 20 or 21, **characterized in that** the intended breakpoint extends from the edge of the guide shell in the direction to the pole region up to beyond the equator region.

23. The joint rod according to Claims 20 to 22, **characterized in that** the intended breakpoint is opened during the mounting of ball stud and guide shell or breaks open due to the introduction of the ball of the ball stud into the guide shell during the mounting, so that springing back of the guide shell which ensures the introduction of the ball of the ball stud is ensured.

24. The joint rod according to any one of Claims 20 to 23, **characterized in that** the guide shell springs back after the mounting, so that the edges of the intended breakpoint again nearly or completely press against one another.

25. The joint rod according to any one of Claims 22 to 26, **characterized in that** the intended breakpoint is designed in the form of a V-shaped notch which reduces the wall thickness of the guide shell.

26. The joint rod according to any one of Claims 20 to 25, **characterized in that** at least one first notch is introduced into the guide shell (4) from the direction of the external diameter (4D).

27. The joint rod according to any one of Claims 20 to 26, **characterized in that** at least one second notch is introduced into the guide shell (4) from the direction of the internal diameter (4d) thereof.

28. The joint rod according to any one of Claims 20 to 79, **characterized in that** at least one first notch and one second notch are introduced into the guide shell (4).

29. The joint rod according to any one of Claims 22 to 28, **characterized in that** the first notch and the second notch are arranged opposite to one another and the intended breakpoint is formed between them.

## Revendications

1. Tringle articulée destinée à être utilisée dans des véhicules, avec un corps de jambe de force dont au moins une extrémité est raccordée à une articulation, le corps de jambe de force étant formé par un profilé ouvert et l'articulation par une rotule supportée de façon articulée dans une coquille de glissement à paroi mince, l'extrémité du corps de jambe de force et la coquille de glissement étant au moins en partie enrobées ensemble dans une enveloppe de plastique et l'enveloppe de plastique établissant la liaison entre l'extrémité du corps de jambe de force et la coquille de glissement à paroi mince de l'articulation à rotule, dans laquelle
- le corps de jambe de force raccordé à une articulation est réalisé sous la forme d'un profilé en U avec deux parois qui sont orientées dans la direction de l'axe longitudinal du tourillon sphérique et avec une partie de profilé située entre celles-ci et
- le corps de jambe de force est conformé au niveau de chaque articulation comme un segment d'anneau ou un anneau et
- un collet ou une bride se raccorde au segment d'anneau ou à l'anneau et rejoint la section de profilé située entre les parois du profilé en U et
- l'extrémité du corps de jambe de force est profilée dans le plan perpendiculaire à l'axe longitudinal du tourillon sphérique de telle façon qu'il entoure au moins partiellement la rotule, l'extrémité du corps de jambe de force entourant la rotule sur au moins un tiers de sa circonférence.

2. Tringle articulée selon la revendication 1, **caractérisée en ce qu'**une articulation se raccorde à chaque extrémité du corps de jambe de force et **en ce que**, dans la position de construction, chaque rotule des deux tourillons sphériques repose avec le centre de sa sphère dans l'axe d'inertie principal orienté dans le sens de la longueur du corps de jambe de force.

3. Tringle articulée selon la revendication 1 ou 2, **caractérisée en ce que** le corps de jambe de force se compose de tôle, de plastique, de composite armé de fibres ou de leurs combinaisons.

4. Tringle articulée selon l'une des revendications 1 à 3, **caractérisée en ce que** le corps de jambe de force est une pièce mise en forme en tôle.

5. Tringle articulée selon l'une des revendications 1 à 4, **caractérisée en ce que** le corps de jambe de force est capable de rotation ou de torsion plastique (irréversible) le long de son axe longitudinal et la position angulaire des articulations les unes par rapport aux autres peut ainsi être ajustée.

6. Tringle articulée selon l'une des revendications 1 à 5, **caractérisée en ce que** le segment d'anneau ou l'anneau présente une paroi qui est orientée pour l'essentiel dans la direction de l'axe longitudinal des tourillons sphériques.

7. Tringle articulée selon la revendication 6, **caractérisée en ce que** les parois du corps de jambe de force suivent au moins en partie la courbure du segment d'anneau ou de l'anneau en direction de l'articulation.

8. Tringle articulée selon l'une des revendications 1 à 7, **caractérisée en ce que** la hauteur de l'enveloppe de plastique dans la direction de l'axe longitudinal du tourillon sphérique représente au moins un quart du diamètre de la rotule et s'étend au-delà de l'équateur de la rotule du tourillon sphérique.

9. Tringle articulée selon l'une des revendications 1 à 8, **caractérisée en ce que** l'enveloppe de plastique est adaptée, dans la zone de la rotule tournée à l'opposé du tourillon, à la courbure de la rotule et de la coquille de glissement.

10. Tringle articulée selon l'une des revendications 1 à 9, **caractérisée en ce que** l'enveloppe de plastique se compose de plastique armé ou non armé.

11. Tringle articulée selon la revendication 10, **caractérisée en ce que** l'enveloppe de plastique se compose de plastique armé de fibres de verre.

12. Tringle articulée selon la revendication 10 ou 11, **caractérisée en ce que** la propriété des points d'articulation peut être déterminée aussi par la proportion de fibres dans l'enveloppe de plastique.

13. Tringle articulée selon l'une des revendications 1 à 12, **caractérisée en ce que** l'enveloppe de plastique présente en direction du tourillon une ouverture qui définit les degrés de liberté du mouvement pivotant du tourillon sphérique.

14. Tringle articulée selon l'une des revendications 1 à 13, **caractérisée en ce que** le corps de jambe de force est muni d'une couche de protection de la surface.

15. Tringle articulée selon l'une des revendications 1 à 16, **caractérisée en ce que** l'enveloppe de plastique laisse libre une zone de la coquille de glissement qui fait face au tourillon.

16. Tringle articulée selon la revendication 15, **caractérisée en ce que** la partie de la coquille de glissement non munie d'une enveloppe de plastique, au minimum, est munie d'un revêtement résistant aux chocs et aux coups.

17. Tringle articulée selon l'une des revendications 1 à 16, **caractérisée en ce que** le diamètre extérieur de la coquille de glissement suit celui de la rotule.

18. Tringle articulée selon l'une des revendications 1 à 17, **caractérisée en ce que** le diamètre extérieur de la coquille de glissement suit celui de la rotule dans les zones faisant suite à la zone du pôle.

19. Tringle articulée selon l'une des revendications 1 à 18, **caractérisée en ce que** la zone de la paroi de la coquille de glissement située au niveau de son pôle est renforcée.

20. Tringle articulée selon l'une des revendications 1 à 19, **caractérisée en ce que** la coquille de glissement présente au moins un point de rupture garantissant son montage sur la rotule du tourillon sphérique.

21. Tringle articulée selon la revendication 20, **caractérisée en ce que** le point de rupture est réalisé sous la forme d'une encoche.

22. Tringle articulée selon la revendication 20 ou 21, **caractérisée en ce que** le point de rupture s'étend du bord de la coquille de glissement vers la zone du pôle jusque au-delà de la zone de l'équateur.

23. Tringle articulée selon la revendication 20 bis 22, **caractérisée en ce que** le point de rupture est ouvert lors du montage du tourillon sphérique et de la coquille de glissement ou se casse pendant le montage lors de l'insertion de la rotule du tourillon sphérique dans la coquille de glissement, de sorte qu'une ouverture élastique de la coquille de glissement garantissant l'insertion de la rotule du tourillon sphérique est garantie.

24. Tringle articulée selon l'une des revendications 20 à 23, **caractérisée en ce que** la coquille de glissement reprend sa forme après le montage, de sorte que les bords du point de rupture s'apposent à nouveau presque ou complètement l'un contre l'autre.

25. Tringle articulée selon l'une des revendications 22 bis 26, **caractérisée en ce que** le point de rupture est conformé comme une encoche en forme de V réduisant l'épaisseur de paroi de la coquille de glissement.

26. Tringle articulée selon l'une des revendications 20 bis 25, **caractérisée en ce qu'**une première encoche au moins est réalisée dans la coquille de glissement (4) à partir de la direction du diamètre extérieur (4D).

27. Tringle articulée selon l'une des revendications 20 bis 26, **caractérisée en ce qu'**une deuxième encoche au moins est réalisée dans la coquille de glissement (4) à partir de la direction du diamètre intérieur (4d) de celle-ci.

28. Tringle articulée selon l'une des revendications 20 bis 79, **caractérisée en ce qu'**une première encoche et une deuxième encoche au moins sont formées dans la coquille de glissement (4).

29. Tringle articulée selon l'une des revendications 22 bis 28, **caractérisée en ce que** la première encoche et la deuxième encoche sont disposées l'une en face de l'autre et le point de rupture est formé entre elles.
